Europäisches Patentamt

European Patent Office

Office européen des brevets

(19)

(11) Publication number: **0 190 844 B1**

# EUROPEAN PATENT SPECIFICATION

(12)

(45) Date of publication of patent specification: **23.10.91**   (51) Int. Cl.⁵: **A01N 61/00**

(21) Application number: **86300417.2**

(22) Date of filing: **22.01.86**

The file contains technical information submitted after the application was filed and not included in this specification

(54) **Baits.**

(30) Priority: **08.02.85 GB 8503322**

(43) Date of publication of application:
**13.08.86 Bulletin 86/33**

(45) Publication of the grant of the patent:
**23.10.91 Bulletin 91/43**

(84) Designated Contracting States:
**AT BE CH DE FR GB IT LI LU NL SE**

(56) References cited:
**FR-A- 2 241 252**
**US-A- 3 076 744**
**US-A- 4 344 893**

**CHEMICAL ABSTRACTS, vol. 93, no. 7, 18th August 1980, page 287, abstract no. 63550v, Columbus, Ohio, US; V.P. DREMOVA et al.: "Possibility of the use of compounds with sterilizing and hormonal activity in the control of insect pest species", & BIOL. AKT. VESHCHESTVA ZASHCH. RAST. 1979, 112-16**

**CHEMICAL ABSTRACTS, vol. 75, no. 23, 6th December 1971, page 226, abstract no. 139605t, Columbus, Ohio, US; & ZA-A-70 03 040 (CPC INTERNATIONAL INC.) 14-04-1971**

(73) Proprietor: **SCHERING AGROCHEMICALS LIMITED**

**Hauxton Cambridge CB2 5HU(GB)**

(72) Inventor: **Boase, Clive James**
**8 South Terrace**
**Sawston Cambridge(GB)**

(74) Representative: **Waldman, Ralph David et al**
**Schering Agrochemicals Limited Industrial Property Department Chesterford Park Research Station**
**Saffron Walden Essex CB10 1XL(GB)**

## Description

This invention relates to baits, particularly for carrying insecticides.

Insecticides can be formulated in admixture with a bait to attract insects to the insecticide. Insects which are commonly controlled by means of a bait are usual crawling insects, such as cockroaches and ants. Baits have to be attractive and palatable to the insect to ensure sufficient intake of insecticide to kill the insect and/or that sufficient is taken back to a colony to kill other insects and especially the queen within the colony.

We have now found a bait formulation which is particularly effective.

The invention thus provides a bait into which an insecticide can be incorporated which comprises a) peanut butter, b) glycerol and c) a starch based flour, in which the weight ratio of (a) to (b) is from 10:1 to 2:1 and of (c) to (b) is from 5:1 to 1:1.

Generally the flour comprises at least 20% by weight of the bait. A particularly suitable bait is one comprising about 10% glycerol, 25% flour and 65% peanut butter. The flour is usually wheat flour but other fours, e.g. maize, barley or potato flour, may be used. The peanut butter is preferably conventional smooth peanut butter.

The baits can include other components such as attractants, e.g. pheromones. feeding stimulants, e.g. methyl myristate, stabilisers and buffers.

The baits can be used with a wide range of insecticides but particularly those compounds claimed in our USP 4,344,893 and especially 4-chloro-4'-trifluoromethylsulphonyloxybenzophenone formylhydrazone. The baits can however be used with other insecticides, e.g. carbamates such as bendiocarb and propoxur and the insecticide sold under the trade name "Amdro", i.e. 1,5-bis-$\alpha,\alpha,\alpha$-trifluoro-p-tolyl)-1,4-pentadien-3-one-(1,4,5,6-tetrahydro-5,5-dimethyl-2-pyrimidinyl)hydrazone.

The invention is illustrated in the following Examples.

### Example 1

Wholemeal flour was passed through a 710 micron aperture sieve to remove the coarser bran and the resulting flour was then mixed with "Sun Pat" smooth peanut butter to give 25% w/w in the finished formulation. A similar mix was prepared containing glycerol at a concentration of 10% and flour at 25% concentration.

Six 1g portions of each bait were weighed onto watch glasses. Those twelve baits were placed alternately around the periphery of the inside of a 25cm diameter circular plastic bowl. A harbourage and a water source were placed in the centre of the bowl and approximately 200 mixed sex, mixed age B. germanica added. The baits were weighed at daily intervals over the next four days. The results were as follows.

| | Relative amount (expressed as % of total) of each bait type consumed over 4 days |
| --- | --- |
| Peanut butter + flour | 13 |
| Peanut butter + flour + glycerol | 37 |

It will be seen that glycerol makes this bait extremely palatable.

We have shown that the consumption of peanut butter alone after 4 days in a similar test can be increased 12 fold by addition of only 25% flour. The three way mix is thus a particularly valuable bait.

The palatability of the three component baits to other species of cockroaches can be seen from the following results of similar tests.

Proportion (expressed as % of total consumption) of each bait type eaten by 3 cockroach species after three days

| | Peanut butter | Peanut butter + flour + glycerol |
|---|---|---|
| **Blatta orientalis** | 15 | 85 |
| **Periplaneta americana** | 17.7 | 82.3 |
| **Neostylopyga rhombifolia** | 17.4 | 82.6 |

Example 2

An aqueous suspension concentrate comprising 50% w/v 4-chloro-4'-trifluoromethylsulphonyloxybenzophenone formylhydrazone, 5% w/v nonionic surfactants, 10.5% propylene glycol, together with small amounts of xanthan gum suspending agent, silicone antifoam and formaldehyde, was mixed with the three way bait of Example 1 to give a concentration of active ingredient in the bait of 0.25%.

Sites infested with crickets and various varieties of cockroaches were chosen and populations were assessed by using Roatel live-traps placed at a fixed number of up to 50 locations in each premises. Traps were left in position for a specified number of either two or three days, and the catch then examined, counted and released. Two such trapping rounds were carried out prior to treatment, and post-treatment assessments continued regularly for a period of not less than 100 days.

Bait stations were prepared by cementing a 5cm length of 2cm diameter pipe onto a 5 x 10cm piece of plastic laminate. A 5g plug of the prepared bait was packed into the centre section of the tube. The bait stations were positioned around sites. The position of each bait was recorded, and the baits were examined at 2 weeks after treatments to determine the degree of bait consumption. If all or most of the bait had been eaten, then the station was replaced with a fresh one. At 100 days after treatment all the bait stations were removed. Results are shown in the following table.

EP 0 190 844 B1

## TABLE

| | Species | No of Baits | Average No. of insects pre-treatment | % Reduction of in insects | | |
|---|---|---|---|---|---|---|
| | | | | 7 | 90-110 | >110 |
| Days after treatment | | | | | | |
| Site A | P.a. | 268 | 103.7 | 100 | – | 100 |
| | A.d. | | 3.3 | 100 | – | 100 |
| Site B | B.o. | 85 | 19.5 | 84.6 | 94.9 | – |
| | B.g. | | 40 | 97.4 | 100 | - |
| | A.d. | | 38 | 97.6 | 100 | – |

Key

Cockroaches

    P.a. = Periplaneta americana

    B.o. = Blatta orientalis

    B.g. = Blattella germanica

Crickets

    A.d. = Acheta domestica

– = not determined

## Claims

1. A bait into which an insecticide can be incorporated which comprises
   a) peanut butter
   b) glycerol and
   c) a starch based flour, in which the weight ratio of (a) to (b) is from 10:1 to 2:1 and of (c) to (b) is from 5:1 to 1:1.

2. A bait according to Claim 1 which comprises 0.01 to 0.5% by weight of 4-chloro-4'-trifluoromethylsulphonyloxybenzophenone formylhydrazone.

## Revendications

4

1. Appât auquel on peut incorporer un insecticide et qui comprend :
   a) du beurre d'arachide,
   b) du glycérol, et
   c) une farine à base d'amidon, appât dans lequel le rapport pondéral de (a) à (b) se situe entre 10:1 et 2:1 et le rapport de (c) à (b) se situe entre 5:1 et 1:1.

2. Appât selon la revendication 1, qui comprend 0,01 à 0,5 % en poids de formylhydrazone de 4-chloro-4'-trifluorométhylsulfonyloxybenzophénone.

**Patentansprüche**

1. Köder, der ein Insektizid enthalten kann, bestehend aus
   a) Erdnußbutter,
   b) Glycerin und
   c) einem Mehl auf Stärkebasis, wobei das Gewichtsverhältnis von a) zu b) sich wie 10:1 bis 2:1 und von c) zu b) sich wie 5:1 bis 1:1 verhält.

2. Köder nach Anspruch 1 gekennzeichnet durch einen Gehalt von 0,01 bis 0,5 Gew.-% 4-Chlor-4'-trifluor-methylsulphonyloxybenzophenon-formylhydrazon.